# EUROPÄISCHE PATENTSCHRIFT

(11) **EP 1 310 708 B1**
(45) Veröffentlichungstag und Bekanntmachung des Hinweises auf die Patenterteilung: **04.01.2006**
(21) Anmeldenummer: 02022660.1
(22) Anmeldetag: 10.10.2002
(51) Int. Cl.: F16J 15/32

(54) **Dichtung einer Druckkammer**
Pressure chamber sealing
Joint d'une chambre de pressure

(30) Priorität: 13.11.2001 DE 10155694
(43) Veröffentlichungstag der Anmeldung: 14.05.2003
(73) Patentinhaber: MAHLE Ventiltrieb GmbH, 70376 Stuttgart (DE); CR Elastomere GmbH, 51379 Leverkusen (DE)
(72) Erfinder: Lechner, Martin, Dr., 70378 Stuttgart (DE); Pesch, Klaus, 51379 Leverkusen (DE)
(74) Vertreter: Patentanwalts-Partnerschaft Rotermund + Pfusch + Bernhard

(56) Entgegenhaltungen:
- DE-A- 2 458 974
- DE-A- 4 436 545
- DE-A- 19 505 012
- DE-U- 7 108 872
- GB-A- 759 233
- GB-A- 860 089
- GB-A- 1 577 264
- US-A- 6 149 163

## Beschreibung

Die Erfindung betrifft eine Dichtung einer Druckkammer nach dem Oberbegriff des Patentanspruchs 1.

Eine solche Dichtung ist beispielsweise aus DE 24 58 974 A1 bekannt.

Die Erfindung beschäftigt sich mit dem Problem, eine gattungsgemäße Druckkammer auf konstruktiv einfache und funktionell wirksame Weise mit einer Dämpfungseinrichtung gegen Druckpulsationen zu versehen.

Eine Lösung dieses Problems wird erfindungsgemäß durch eine gattungsgemäße Dichtung nach dem kennzeichnenden Merkmal des Patentanspruchs 1 erreicht.

Zweckmäßige Ausgestaltungen dieser Erfindung sind Gegenstand der Unteransprüche.

Die Efindung beruht auf dem allgemeinen Gedanken, eine Radialdichtung gleichzeitig als Dämpfungseinrichtung auszubilden und zu diesem Zweck in axialer Richtung möglichst unbehindert, das heißt abdeckungsfrei dem Druckraum auszusetzen, in dem die Druckpulsationen gedämpft werden sollen.

Bei der Ausbildung des Dämpfungsbereiches der Dichtung ist es wichtig, daß ein ausreichender Verformungsbereich zur Verfügung steht, da anderenfalls keine Dämpfung erzielt werden kann. Dies bedeutet, daß das Dichtungsmaterial in dem Dämpfungsbereich, sofern es nicht in sich kompressibel ist, einen Freiraum gegenüber den angrenzenden Dichtflächen besitzen muß, in dem die Verformung erfolgen kann. Durch die Verformbarkeit der Dichtung tritt bei einer Druckerhöhung innerhalb des Druckraumes eine zumindest temporäre Volumenvergrößerung ein, das heißt eine Volumenvergrößerung, die mit Abbau der Druckerhöhung wieder aufgehoben wird.

Ein vorteilhaftes Ausführungsbeispiel der Erfindung ist in der Zeichnung dargestellt.

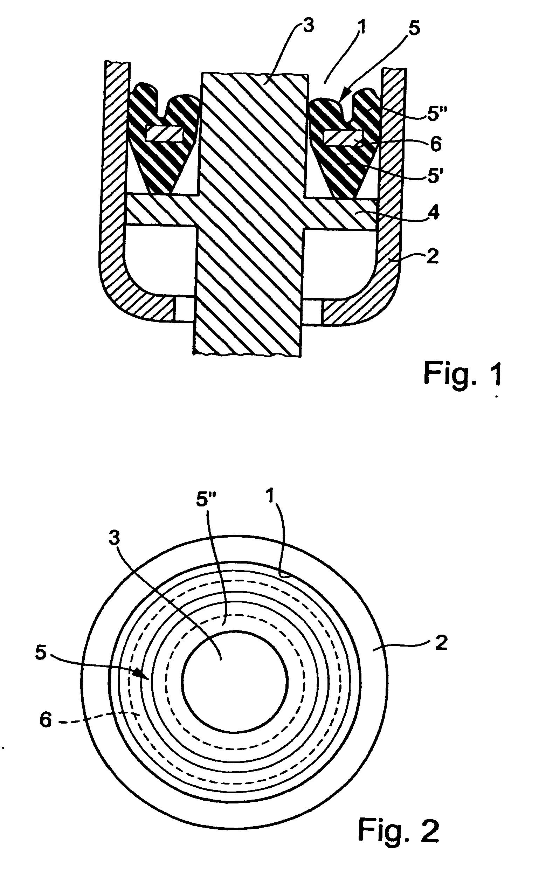

In dieser zeigt die einzige
- Fig. 1: einen Schnitt durch einen axialen Endbereich einer Druckkammer.
- Fig. 2: eine Draufsicht auf die Druckkammer nach Fig. 1

Eine Hydraulik-Druckkammer 1 ist von einer ersten Begrenzungswand 2 und einer zweiten Begrenzungswand 3 begrenzt. Dabei ist die zweite Begrenzungswand 3 als ein beweglicher Kolben und die erste Begrenzungswand 2 als ein Zylinder, in dem die erste Begrenzungswand 2 axial verschiebbar gelagert ist, ausgebildet. An dem Kolben als zweiter Begrenzungswand 3 ist ein axiales Widerlager 4 für eine axiale Anlage einer Radialdichtung 5 angeformt.

Die Druckkammer 1 ist als Ringraum ausgebildet mit radialen Dichtwänden, die von der ersten und zweiten Begrenzungswand 2; 3 gebildet werden. Die Radialdichtung 5 besitzt mit Bezug auf ihre axiale Ausdehnung einen an das Widerlager 4 anlegbaren Dämpfungsbereich 5' sowie einen an die Druckkammer 1 direkt angrenzenden Dichtungsbereich 5''.

Der Dichtungsbereich 5'' ist V-förmig ausgeführt mit der offenen Seite des V in Richtung der Druckkammer 1. Die radiale Dichtung wird durch die Enden der V-Schenkel des Dichtungsbereiches 5'' erreicht. Zwischen dem Dämpfungsbereich 5' und dem Dichtungsbereich 5" der Radialdichtung 5 ist ein Versteifungsring 6 eingelegt.

In dem Dämpfungsbereich 5' ist die Radialdichtung 5 als Ringkonus ausgebildet, bei dem die schmale Stirnseite an dem Widerlager 4 anliegt. In diesem Bereich ist die Radialdichtung 5 elastisch dämpfungswirkend verformbar. Dabei verschiebt sich die Radialdichtung 5 axial in Richtung auf das Widerlager 4, wobei sich der zunächst von Dichtmaterial freie Raum außerhalb des Ringkonus mit verformtem Dichtmaterial anfüllen kann.

In dem Dämpfungsbereich 5' kann innerhalb des Dichtmaterils ein komprimierbarer Hohlraum vorgesehen sein.

An der dem Widerlager 4 gegenüberliegenden Stirnseite kann die Radialdichtung 5 gegen ein Abheben von dem Widerlager 4 durch einen insbesondere an der zweiten Begrenzungswand 3 vorgesehenen Anschlag gesichert werden. Wichtig für die erfindungsgemäße Dämpfungsfunktion ist lediglich, daß zur elastischen Verformung des Dämpfungsbereiches ein hierzu erforderliches Axialverschieben der Radialdichtung 5 möglich ist.

Der Versteifungsring kann aus Metall bestehen.

## Patentansprüche

1. Dichtung einer Druckkammer, bei der die Druckkammer gegeneinander bewegliche Begrenzungswände und einen durch eine Radialdichtung ausgefüllten Ringspalt zwischen einer ersten und einer zweiten Begrenzungswand aufweist, wobei diese Begrenzungswände als radiale, von der Radialdichtung kontaktierte Dichtflächen'ausgebildet sind und die Radialdichtung gegenüber den beiden radialen Dichtflächen axial beweglich gelagert ist, sich auf der nicht druckbeaufschlagten axialen Stirnseite an einem mit einer der Begrenzungswände verbundenen Widerlager abstützen kann und aus elastisch verformbarem Material besteht,
**dadurch gekennzeichnet,**
**daß** die Radialdichtung (5) zumindest in einem an das Widerlager (4) anlegbaren Teilbereich (5') als durch elastische Verformung axial verkürzbares Element ausgebildet ist.

2. Dichtung nach Anspruch 1,
**dadurch gekennzeichnet,**
**daß** die Radialdichtung (5) in unverkürztem, das heißt unverformtem Zustand in ihrem Teilbereich (5) einen radialen Abstand zu mindestens einer der radialen Begrenzungswände aufweist.

3. Dichtung nach Anspruch 1 oder 2,
**dadurch gekennzeichnet, daß** die Radialdichtung (5) im Inneren eine Einlage (6) aus weniger elastischem Material aufweist.

4. Dichtung nach einem der Ansprüche 1 bis 3,
**dadurch gekennzeichnet,**
**daß** der der Druckkammer (1) zugewandte Bereich der Radialdichtung (5) V-förmig mit zum Druckraum hin offener V-Seite ausgebildet ist.

5. Dichtung nach einem der Ansprüche 1 bis 4,
**dadurch gekennzeichnet,**
**daß** in dem verkürzbaren Verformungsbereich (5') ein Hohlraum vorgesehen ist.

6. Dichtung nach Anspruch 5,
**dadurch gekennzeichnet,**
**daß** der Hohlraum mit einem komprimierbaren Fluid gefüllt ist.

## Claims

1. A seal for a pressure chamber in which the pressure chamber has bordering walls that are movable in relation to one another and an annular gap filled up by a radial seal between a first bordering wall and a second bordering wall, these bordering walls being designed as radial sealing faces contacted by the radial seal, and the radial seal being mounted so it is axially movable with respect to the two radial sealing surfaces and can be supported on an abutment connected to the bordering walls on the axial end face, which is not exposed to pressure, and is made of an elastically deformable material,
**characterized in that**
the radial seal (5) is designed as an element that can be shortened axially by elastic deformation at least in a partial area (5') that can be applied to the abutment (4).

2. The seal according to Claim 1,
**characterized in that**
the radial seal (5) is at a radial distance from at least one of the radial bordering walls in the unshortened, i.e., undeformed state in its partial area (5).

3. The seal according to Claim 1 or 2,
**characterized in that**
the radial seal (5) has an insert (6) made of a less elastic material in its interior.

4. The seal according to any one of Claims 1 through 3,
**characterized in that**
the area of the radial seal (5) facing the pressure chamber (1) is designed in a V shape with the V side open toward the pressure space.

5. The seal according to any one of Claims 1 through 4,
**characterized in that**
a cavity is provided in the shortenable deformation area (5').

6. The seal according to Claim 5,
**characterized in that**
the cavity is filled with a compressible fluid.

## Revendications

1. Joint d'étanchéité d'une chambre de pression dans laquelle la chambre de pression présente des parois de délimitation mobiles l'une par rapport à l'autre et un interstice annulaire rempli par un joint d'étanchéité radial, entre une première et une deuxième parois de délimitation, ces parois de délimitation étant réalisées comme surfaces d'étanchéité radiales en contact avec le joint d'étanchéité radial, et le joint d'étanchéité radial étant logé de manière mobile axialement par rapport aux deux surfaces d'étanchéité radiales, pouvant prendre appui sur le côté frontal axial non exposé à la pression sur un appui relié à l'une des parois de délimitation et étant constitué de matériau déformable élastiquement,
**caractérisé en ce**
**qu'**au moins dans une zone partielle (5') pouvant venir en contact sur l'appui (4), le joint d'étanchéité radial (5) est réalisé comme élément pouvant être raccourci axialement par déformation élastique.

2. Joint d'étanchéité selon la revendication 1,
**caractérisé en ce**
**qu'**à l'état non raccourci, c'est-à-dire non déformé, le joint d'étanchéité radial (5) présente dans sa zone partielle (5) un écartement radial par rapport à au moins l'une des parois de délimitation radiales.

3. Joint d'étanchéité selon la revendication 1 ou 2,
**caractérisé en ce**
**que** le joint d'étanchéité radial (5) présente à l'intérieur un insert (6) en matériau moins élastique.

4. Joint d'étanchéité selon l'une des revendications 1 à 3,
**caractérisé en ce**
**que** la zone du joint d'étanchéité radial (5) orientée vers la chambre de pression (1) est réalisée en forme de V, le côté du V ouvert étant tourné vers la chambre de pression.

5. Joint d'étanchéité selon l'une des revendications 1 à 4,
**caractérisé en ce**
**qu'**un espace creux est prévu dans la zone de déformation (5') pouvant être raccourcie.

6. Joint d'étanchéité selon la revendication 5,
**caractérisé en ce**
**que** l'espace creux est rempli d'un fluide compressible.
